# EUROPÄISCHE PATENTANMELDUNG

(11) **EP 1 092 591 A2**
(43) Veröffentlichungstag der Anmeldung: **18.04.2001**
(21) Anmeldenummer: 00120358.7
(22) Anmeldetag: 16.09.2000
(51) Int. Cl.: B60R 9/058

(54) **Dachreling für Fahrzeuge und Verfahren zum Herstellen**

(30) Priorität: 08.10.1999 DE 19948476
(71) Anmelder: JAC Products Deutschland GmbH, 42285 Wuppertal (DE)
(72) Erfinder: Fisch, Fritz, 42111 Wuppertal (DE); Koch, Wilfried, 35282 Rauschenberg (DE); Drees, Reinhard, 42111 Wuppertal (DE)

(57) **Zusammenfassung**

Beschrieben wird eine aus einem Galeriestab (1) und Relingfüßen (2) bestehende Dachreling. Dabei ist vorgesehen, daß die Relingfüße (2) aus dem gleichen metallischen Werkstoff wie der Galeriestab (1) bestehen und aus vorgebogenen Rohrstücken gebildet sind, die mittels eines InnenhochdruckUmformverfahrens zu Relingfüßen umgeformt werden.

## Beschreibung

Die Erfindung bezieht sich auf eine Dachreling für Fahrzeuge mit einem rohrförmigen Galeriestab, der an jedem Ende mit einem Relingfuß bestückt ist, wobei jeder Relingfuß aus einem eine Bogenform aufweisenden Formkörper mit einem ersten unteren auf dem Dach eines Fahrzeugs abstützbaren Ende und einem zweiten oberen Ende besteht, das einen in ein Galeriestabende einführbaren, in seiner axialen Länge durch eine Ringschulter begrenzten Steckzapfen aufweist. Die Erfindung bezieht sich weiterhin auf ein Verfahren zum Herstellen einer Dachreling.

Bei Dachrelings in der klassischen Ausführung, d.h. jeweils bestehend aus Endstützen, ggf. Mittelstütze und Galeriestab (vgl. z.B. DE 40 04 829 C2), sind bedingt durch das Herstellverfahren der in der Regel aus Guß gebildeten Stützen, nur bedingt Gewichtseinsparungen möglich. Andererseits sind Gewichtseinsparungen bei Dachrelings äußerst wünschenswert. Die klassische Ausführung von Dachrelings weist aber auch hinsichtlich des optischen Erscheinungsbilds gewisse Nachteile auf. Das optische Erscheinungsbild einer Dachreling wird in der Regel durch eine Oberflächenbeschichtung derselben bestimmt. Hier hat sich die Pulverbeschichtung gegenüber einer Naßlackierung durchgesetzt. Mit einer Pulverbeschichtung lassen sich jedoch nicht alle von der Abnehmerschaft gewünschten Farbtöne erzielen. Um z.B. einen Metallic-Effekt zu erreichen sind mehrere Pulverschichten erforderlich. Wie die Praxis zeigt, beeinträchtigen mehrere Pulverschichten das Oberflächenfinish, da bei zunehmender Schichtdicke die Oberfläche einen Orangenhauteffekt erhält. Die Erzielung einer metallischen Oberflächenstruktur, z.B. eine eloxierte Oberfläche ist nur bei Verwendung geschmiedeter Stützfüße möglich. Aber auch hierbei treten Farb- und Glanzunterschiede zwischen den Stützen und dem Galeriestab auf, die das Erscheinungsbild einer Dachreling nachteilig beeinflussen.

In der DE 42 23 898 ist eine Dachreling gezeigt, bei der die Relingfüße einstückig mit dem Galeriestab sind. Bei dieser bekannten Dachreling bestehen keine Gewichtsprobleme und auch keine Probleme hinsichtlich einer Oberflächenbeschichtung. Für die Herstellung einer einteiligen Dachreling werden aber recht aufwendige, großvolumige und damit sehr teure Vorrichtungen und Werkzeuge benötigt, so daß Dachrelings dieser Art nur für einen Großserieneinsatz in Frage kommen können.

Ausgehend von einer Dachreling der eingangs genannten Art liegt der Erfindung die Aufgabe zugrunde, Vorsorge dafür zu treffen, daß den Kundenanforderungen in bezug auf eine dekorative Dachreling-Oberfläche ebenso Rechnung getragen wird wie den Anforderungen an eine Gewichtsreduzierung.

Diese Aufgabe wird erfindungsgemäß durch die Maßnahmen gemäß der Patentansprüche 1 und 5 gelöst, während zweckmäßige Ausgestaltungen und vorteilhafte Weiterbildungen der Erfindung in den Unteransprüchen gekennzeichnet sind.

Ein erster wesentlicher Vorteil der Erfindung besteht darin, daß sowohl der Galeriestab als auch die Relingfüße aus dem gleichen Ausgangsmaterial (Stahl, Aluminium, Aluminiumlegierung) bestehen, wodurch sich hoch dekorative Oberflächen in Eloxal-Qualität erzielen lassen. Ein weiterer wesentlicher Vorteil der Erfindung ist darin zu sehen, daß die Relingfüße aus einfachen Rohrstücken gebildet und damit leicht und kostengünstig sind.

Ausführungsbeispiele der Erfindung werden nachfolgend anhand der Zeichnungen näher erläutert, und es zeigen:
- Fig. 1: einen Vertikalschnitt durch einen Endbereich der Dachreling gemäß einer ersten Ausführungsform,
- Fig. 2: einen Schnitt A-A nach Fig. 1,
- Fig. 3: einen Vertikalschnitt durch einen Endbereich der Dachreling gemäß einer zweiten Ausführungsform,
- Fig. 4: einen Schnitt B-B nach Fig. 3,
- Fig. 5: ein für die Herstellung eines Relingfußes vorgesehenes Rohrstück,
- Fig. 6: das Rohrstück nach Fig. 5 im vorgebogenen Zustand,
- Fig. 7: das Rohrstück nach Fig. 5 und 6 im umgeformten Zustand und
- Fig. 8: die Ansicht einer Umformwerkzeughälfte zum Umformen eines vorgebogenen Rohrstücks in einen Relingfuß.

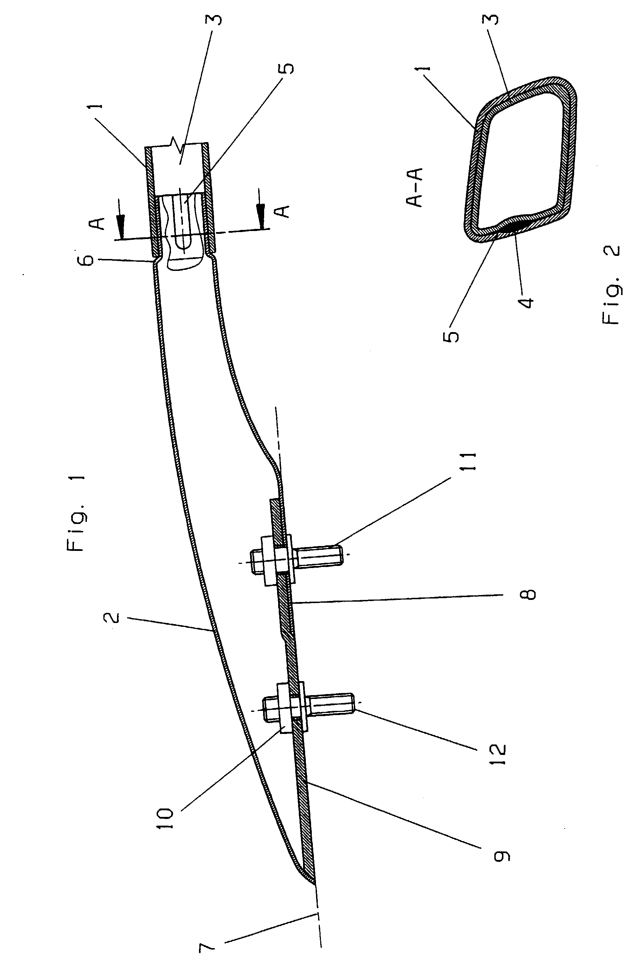

Fig. 1 zeigt einen Endbereich einer Dachreling mit einem rohrförmigen Galeriestab 1 und einem Relingfuß 2. Am anderen, nicht gezeigten Ende ist der Galeriestab 1 mit einem spiegelverkehrt zum gezeigten Relingfuß ausgebildeten Relingfuß versehen.

Der Galeriestab 1 besteht aus einem Rohrabschnitt und weist einen runden oder - wie in Fig. 2 gezeigt - unrunden Querschnitt auf.

Als Ausgangsmaterial für den Galeriestab kommt Stahl oder Aluminium bzw. eine Aluminiumlegierung in Frage.

Der Relingfuß 2 nach Fig. 1 weist einen Steckzapfen 3 auf, dessen Außenkontur auf die Innenkontur des Galeriestabs 1 abgestimmt ist. Zwischen dem Steckzapfen 3 und dem Galeriestab 1 kann eine Schraub- oder Klebeverbindung vorgesehen sein. Bevorzugt ist eine Verbindung durch Reibschluß vorgesehen, unterstützt durch ein Spannelement 4 (Keil, Paßstift, Spannstift od. dgl.) für das im Steckzapfen 3 eine Aufnahmenut 5 ausgebildet ist. Die axiale Länge des Steckzapfens 3 ist durch eine Ringschulter 6, gegen die sich der Galeriestab 1 abstützt, begrenzt. Der Relingfuß 2 ist ebenso wie der nichtgezeigte, am anderen Ende des Galeriestabs 1 sitzende aus einem dem Material des Galeriestabs 1 entsprechenden Rohrstück mit einem dem Steckzapfen 3 entsprechenden Durchmesser gebildet. Das Rohrstück ist mit Ausnahme des Steckzapfens aufgeweitet und weist ausgehend von der Ringschulter 6 bis zum unteren Ende einen stetig anwachsenden Durchmesser auf. Der Relingfuß 2 ist insgesamt bogenförmig und weist ein unteres, dem strichpunktiert angedeuteten Fahrzeugdach 7 zugewandtes Ende wie auch ein oberes Ende auf, welches durch den Steckzapfen 3 definiert ist.

Der Relingfuß 2 nach Fig. 1 ist am unteren Ende bereichsweise durch eine Bodenplatte 8 verschlossen, die einstückig mit dem Relingfuß 2 ist. An der Bodenplatte 8 ist ein stabiler Blechstreifen 9, der - wie dargestellt - stufenförmig abgesetzt sein kann, angeordnet. Die Anordnung erfolgt über einen in eine mit dem Blechstreifen 9 verbundene Schweißmutter 10 einschraubbaren Gewindebolzen 11, der auch ggf. zusammen mit einem zweiten Gewindebolzen 12 zur Befestigungsanordnung der Dachreling auf einem Fahrzeugdach 7 dient.

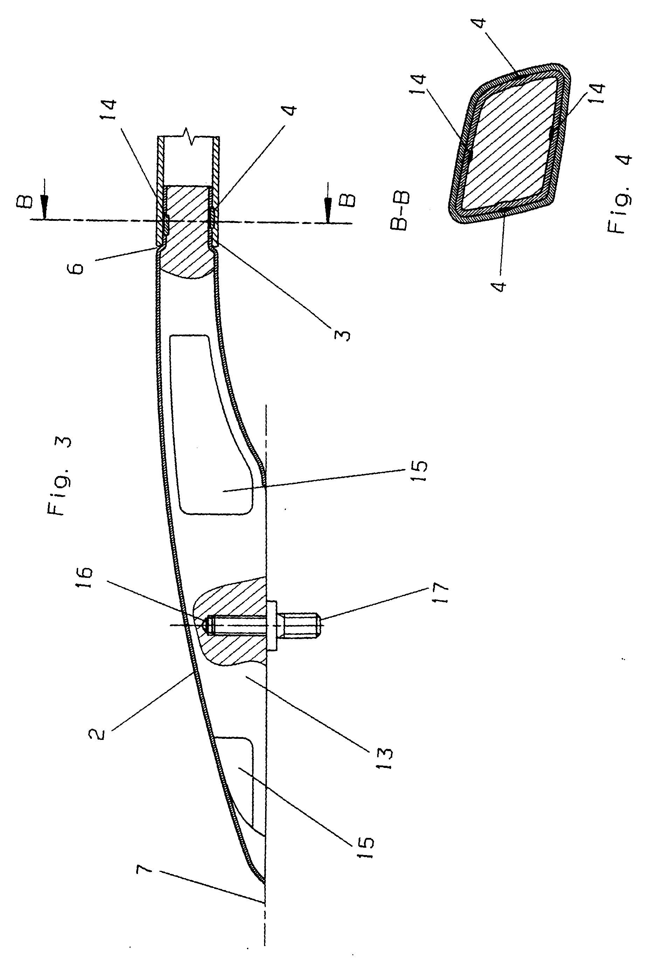

Fig. 3 zeigt einen Endbereich einer Dachreling ähnlich Fig. 1, wobei ein Unterschied in der Gestaltung des Relingfußes 2 zu sehen ist. Dieser ist völlig bodenfrei ausgebildet und nimmt in seinem Innern einen entsprechend dem Hohlraum angepaßten Einsatz 13 auf. Der Einsatz 13 kann über Spannelemente 14 und/oder über eine Klebeverbindung am Relingfuß 2 festgelegt sein. Der Einsatz 13, der aus einem Druckgußteil oder ggf. aus einem Kunststoff-Spritzgußteil besteht, weist material- und gewichtssparende Aussparungen 15 auf und trägt einen in einer Gewindebohrung 16 angeodneten Gewindebolzen 17 zur Befestigungsanordnung der Dachreling auf einem Fahrzeugdach 7.

Nur der Vollständigkeit halber sei erwähnte, daß zwischen den Relingfüßen 2 und dem Fahrzeugdach 7 nicht gezeigte zusammenpreßbare Unterlagen anzuordnen sind, die der Abdichtung und dem Toleranzausgleich dienen.

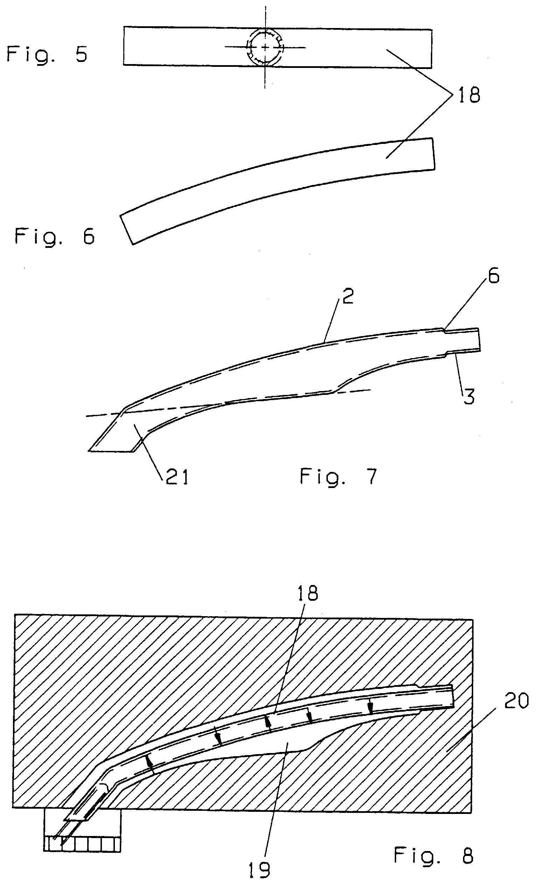

Jeder Relingfuß 2 wird, wie erwähnt aus einem Rohrstück 18 (Fig. 5) gebildet, wobei das Ausgangsmaterial gleich dem des Galeriestabs 1 ist. Das Rohrstück 18 wird zunächst, wie in Fig. 6 gezeigt, vorgebogen und sodann in die der Form des herzustellenden Relingfußes 2 entspechende Kavität 19 eines Umformwerkzeugs 20 eingelegt. In Fig. 8 ist eine Formhälfte eines Umformwerkzeugs in mehr schematischer Darstellungsmanier gezeigt. Nach dem Schließen des Umformwerkzeugs 20 wird das Rohrstück 18 mit einem Druckmedium (Luft, Öl oder Wasser) beaufschlagt und im Innern des Rohrstücks 18 ein Innenhochdruck aufgebaut, wodurch das Rohrstück 18 zu einem sich aufweitenden Umformen veranlaßt wird, was durch die kleinen Richtungspfeile in Fig. 8 angedeutet ist. Der Umformvorgang ist abgeschlossen sobald das Rohrstück 18 mantelseitig vollständig an der Kavitätswandung des Umformwerkzeugs 20 anliegt. Alsdann wird der Innenhochdruck wieder abgebaut, das Umformwerkzeug 20 geöffnet und das nunmehr zu einen Relingfuß 2 nach Fig. 1 oder Fig. 3 umgeformte Rohrstück 18 dem Umformwerkzeug 20 entnommen. Nach dem noch notwendigen Entfernen des verfahrensbedingt verbleibenden Fortsatzes 21 entlang der strichpunktierten Schnittlinie 22 kann der so gebildete Relingfuß 2 mit einem Befestigungselement nach Fig. 1 oder mit einem solchen nach Fig. 3 bestückt und mit dem Galeriestab 1 zusammengesteckt werden. Der Eloxiervorgang od. dgl. kann im Anschluß daran erfolgen, sofern nicht vorgezogen wird, die Einzelteile der Dachreling vor dem Zusammenfügen entsprechend zu behandeln.

Gemäß dem Anspruch 6 ist vorgesehen, daß für jeden Relingfuß 2 ein Rohrstück 18 mit zumindest einer axial durchlaufenden rinnenartigen Nut verwendet wird, die nach erfolgter Innenhochdruckumformung des Rohrstücks 18 lediglich im Bereich des Steckzapfens 3 erhalten wird. Diese Maßnahme bietet zunächst den Vorteil in einfacher Weise die Aufnahmenut 5 zu erhalten und darüber hinaus den Vorteil, daß für den Umformvorgang mehr Material zum Aufweiten zur Verfügung steht.

Bei Dachrelings, die aufgrund ihrer Länge des Galeriestabs 1 einer Abstützung durch eine Mittelstütze bedürfen, empfiehlt es sich, solch eine Mittelstütze (nicht gezeigt) ebenfalls aus einem solchen metallischen Werkstoff zu fertigen wie er für den Galeriestab vorgesehen wird. Auch bietet sich für solche Mittelstützen die Anwendung des für die Herstellung von Relingfüßen 2 beschriebenen Umformverfahrens an.

Der Vollständigkeit halber sei erwähnt, daß bei erfolgreich durchgeführten Versuchen aus Leichtmetall bestehende Rohrstücke verwendet und bei Raumtemperatur (15 - 25°C) umgeformt wurden. Der auf die vorgebogenen Rohrstücke ausgeübte Innenhochdruck lag dabei zwischen 2.000-3.000 im Mittel bei 2.500 bar. Bei Einsatz von Rohrstücken aus Aluminium ist noch eine Wärmeauslagerung (180°C, 8 Std) vorgesehen. Stahl- und Edelstahl-Rohrstücke werden nicht wärmebehandelt.

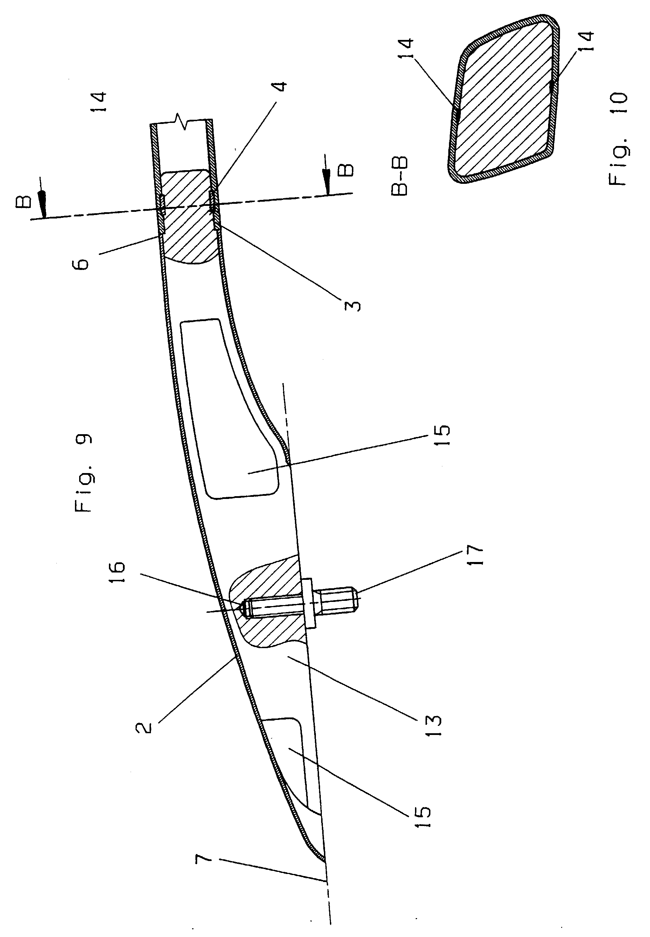

Die noch beigefügte Fig. 9 (und 10) zeigt den Endbereich einer Dachreling mit einem rohrförmigen Galeriestab und einem Relingfuß 2. Der Unterschied besteht gegenüber dem Ausführungsbeispiel gemäß Fig. 3 darin, daß vom Relingfuß 2 der dort vorhandene Steckzapfen 3 nach Fertigstellung des Relingfußes abgetrennt und dessen Funktion vom Steckzapfen 3 des Einsatzes 13 übernommen wurde. Auf diese Weise kann gewünschtenfalls eine Fugenbildung zwischen dem Galeriestabende und der Ringschulter 6 aufgehoben werden.

## Patentansprüche

1. Dachreling für Fahrzeuge mit einem rohrförmigen Galeriestab (1), der an jedem Ende mit einem Relingfuß (2) bestückt ist, wobei jeder Relingfuß (2) aus einem eine Bogenform aufweisenden Formkörper mit einem ersten unteren auf dem Dach (7) eines Fahrzeugs abstützbaren Ende und einem zweiten oberen Ende besteht, das einen in ein Galeriestabende einführbaren, in seiner axialen Länge durch eine Ringschulter (6) begrenzten Steckzapfen (3) aufweist, dadurch gekennzeichnet, daß der bzw. jeder Relingfuß (2) aus dem gleichen metallischen Werkstoff wie der Galeriestab (1) besteht und aus einem vorgebogenen Rohrstück (18) mit einem dem Steckzapfen (3) entsprechenden Durchmesser gebildet ist, daß das vorgebogenen Rohrstück (18) mit Ausnahme des Steckzapfens (3) aufgeweitet ist und ausgehend von der Ringschulter (6) bis zum unteren Ende einen stetig anwachsenden Durchmesser aufweist und daß der bzw. jeder Relingfuß (2) ein daran angeordnetes Befestigungselement zur Befestigungsanordnung der Dachreling auf einem Fahrzeugdach (7) trägt.

2. Dachreling nach Anspruch 1, dadurch gekennzeichnet, daß jeder Relingfuß (2) im Bereich des Steckzapfens (3) zumindest eine Aufnahmenut (5) zum Einsetzen eines eine Kraftschlußverbindung mit dem Galeriestab (1) sicherndes Spannelement (4) aufweist.

3. Dachreling nach Anspruch 1 oder 2, dadurch gekennzeichnet, daß jeder Relingfuß (2) am unteren Ende bereichsweise durch eine aus dem Material des vorgebogenen Rohrstücks (18) geformte Bodenplatte (8) verschlossen ist und daß an der Bodenplatte (8) das aus einem Blechstreifen (9) und zumindest einem Gewindebolzen (11) bestehende Befestigungselement angeordnet ist.

4. Dachreling nach Anspruch 1 oder 2, dadurch gekennzeichnet, daß jeder Relingfuß (2) mit einem der Form seines Hohlraums angepaßten Einsatz (13) ausgestattet ist, wobei der Einsatz (13), der mit zumindest einem Gewindebolzen (17) bestückt ist, durch eine Klemm- und/oder Klebeverbindung an der Hohlraumwandung des Relingfußes (2) gehalten ist.

5. Verfahren zum Herstellen einer Dachreling nach zumindest einem der Ansprüche 1 bis 4, dadurch gekennzeichnet, daß sowohl der Galeriestab (1) als auch die Relingfüße (2) aus Metallrohrabschnitten gebildet werden, wobei die Formgebung eines jeden Relingfußes dadurch erfolgt, daß ein abgelängtes Rohrstück (18) zu einem Bogen vorgeformt und in die der Form des herzustellenden Relingfußes (2) entsprechende Kavität (19) eines Umformwerkzeuges (20) eingelegt und nach dem Schließen des Umformwerkzeuges (20) mit einem Druckmedium beaufschlagt wird, wobei im Innern des Rohrstücks (18) ein Innenhochdruck aufgebaut wird, um das Rohrstück (18) zu einem sich aufweitenden Umformen bis zur vollständigen Anlage an der Kavitätswandung des Umformwerkzeugs (20) zu veranlassen, wonach der Innenhochdruck wieder abgebaut, das Umformwerkzeug (20) geöffnet und das nunmehr zu einem Relingfuß (2) umgeformte Rohrstück (18) dem Umformwerkzeug (20) entnommen wird, um dasselbe nach Beschnitt des unteren Endes durch Zusammenstecken mit dem Galeriestab (1) zu verbinden.

6. Verfahren nach Anspruch 5, dadurch gekennzeichnet, daß für jeden Relingfuß (2) ein Rohrstück (18) mit zumindest einer axial durchlaufenden rinnenartigen Nut verwendet wird, die nach erfolgter Innenhochdruckumformung des Rohrstücks (18) lediglich im Bereich des Steckzapfens (3) als Aufnahmenut (5) erhalten wird.
